# EUROPEAN PATENT APPLICATION

(11) **EP 4 397 997 A1**
(43) Date of publication of application: **10.07.2024**
(21) Application number: 22864204.7
(22) Date of filing: 09.08.2022
(51) Int. Cl.: G01S 13/89, G01S 13/34, G01S 13/931

(54) **ELECTRONIC DEVICE, ELECTRONIC DEVICE CONTROL METHOD, AND PROGRAM**

(30) Priority: 30.08.2021 JP 2021140484
(71) Applicant: Kyocera Corporation, Kyoto-shi Kyoto 612-8501 (JP)
(72) Inventor: TONG Fangwei, Kyoto-shi, Kyoto 612-8501 (JP); SAHARA Tooru, Kyoto-shi, Kyoto 612-8501 (JP); HOMMA Takuya, Kyoto-shi, Kyoto 612-8501 (JP); KURODA Jun, Kyoto-shi, Kyoto 612-8501 (JP); YAMAMOTO Kenji, Kyoto-shi, Kyoto 612-8501 (JP)
(74) Representative: Viering, Jentschura & Partner mbB Patent- und Rechtsanwälte
(86) International application number: PCT/JP2022/030483
(87) International publication number: WO 2023/032619

(57) **Abstract**

An electronic device includes a transmission antenna that transmits a transmission wave, a reception antenna that receives a reflected wave, which is the reflected transmission wave, a controller that controls a radiation pattern of the transmission wave, a signal processor that detects an object on the basis of a transmission signal transmitted as the transmission wave and a reception signal received as the reflected wave. The controller performs control such that, when the transmission wave is transmitted a plurality of times in certain units, a transmission wave with a varied radiation pattern is included at least once. The signal processor outputs a result of the detection of the object on a basis of, among a plurality of clusters obtained by performing clustering on results of detection performed on the object the plurality of times, clusters including a certain number or more of representative points of other clusters within a certain distance from representative points of the clusters.

## Description

### CROSS-REFERENCE TO RELATED APPLICATIONS

The present application claims priority to Japanese Patent Application No. 2021-140484 filed in the Japan Patent Office on August 30, 2021, the entire contents of which are incorporated herein by reference.

### TECHNICAL FIELD

The present disclosure relates to an electronic device, a method for controlling an electronic device, and a program.

### BACKGROUND OF INVENTION

In fields of industries relating to automobiles, for example, techniques for measuring a distance or the like between an automobile and a certain object are of great importance. In particular, various techniques of radar (radio detecting and ranging) for measuring a distance or the like to an object such as an obstacle by transmitting a radio wave such as a millimeter wave and receiving a wave reflected from the object are being studied during these years. Importance of such techniques for measuring a distance or the like is expected to further increase in the future as techniques for assisting drivers in driving and techniques relating to automated driving, where part or the entirety of driving is automated, develop.

With respect to the above-described techniques of radar, various clustering methods are known as algorithms for determining, on the basis of a reception signal, whether an object has been detected. Patent Literature 1, for example, discloses an attempt to improve quality of clustering and detection accuracy by adaptively adjusting the clustering on the basis of features of a detection target. DBSCAN (density-based spatial clustering of applications with noise) is widely used as an algorithm for clustering data on the basis of density. If clustering is not appropriately performed in a determination of detection of an object, objects might not be appropriately detected.

### CITATION LIST

### PATENT LITERATURE

Patent Literature 1: Japanese Unexamined Patent Application Publication No. 2021-34025

### SUMMARY

In an embodiment, an electronic device includes a transmission antenna, a reception antenna, a controller, and a signal processor. The transmission antenna transmits a transmission wave. The reception antenna receives a reflected wave, which is the reflected transmission wave. The controller controls a radiation pattern of the transmission wave. The signal processor detects an object on a basis of a transmission signal transmitted as the transmission wave and a reception signal received as the reflected wave. The controller performs control such that, when the transmission wave is transmitted a plurality of times in certain units, a transmission wave with a varied radiation pattern is included at least once. The signal processor outputs a result of the detection of the object on a basis of, among a plurality of clusters obtained by performing clustering on results of detection performed on the object the plurality of times, clusters including a certain number or more of representative points of other clusters within a certain distance from representative points of the clusters.

In another embodiment, a method for controlling an electronic device includes the steps of transmitting a transmission wave using a transmission antenna, receiving a reflected wave, which is the reflected transmission wave, using a reception antenna, controlling a radiation pattern of the transmission wave, detecting an object on a basis of a transmission signal transmitted as the transmission wave and a reception signal received as the reflected wave, performing control such that, when the transmission wave is transmitted a plurality of times in certain units, a transmission wave with a varied radiation pattern is included at least once, and outputting a result of the detection of the object on a basis of, among a plurality of clusters obtained by performing clustering on results of detection performed on the object the plurality of times, clusters including a certain number or more of representative points of other clusters within a certain distance from representative points of the clusters.

In another embodiment, a program causes an electronic device to perform a process including the steps of transmitting a transmission wave using a transmission antenna, receiving a reflected wave, which is the reflected transmission wave, using a reception antenna, controlling a radiation pattern of the transmission wave, detecting an object on a basis of a transmission signal transmitted as the transmission wave and a reception signal received as the reflected wave, performing control such that, when the transmission wave is transmitted a plurality of times in certain units, a transmission wave with a varied radiation pattern is included at least once, and outputting a result of the detection of the object on a basis of, among a plurality of clusters obtained by performing clustering on results of detection performed on the object the plurality of times, clusters including a certain number or more of representative points of other clusters within a certain distance from representative points of the clusters.

### BRIEF DESCRIPTION OF THE DRAWINGS

FIG. 1 is a diagram illustrating a use mode of an electronic device according to an embodiment.
FIG. 2 is a functional block diagram schematically illustrating configuration of the electronic device according to the embodiment.
FIG. 3 is a diagram illustrating configuration of signals processed by the electronic device according to the embodiment.
FIG. 4 is a diagram illustrating processing of signals performed by the electronic device according to the embodiment.
FIG. 5 is a diagram illustrating the processing of signals performed by the electronic device according to the embodiment.
FIG. 6 is a diagram illustrating the processing of signals performed by the electronic device according to the embodiment.
FIG. 7 is a flowchart illustrating operations performed by the electronic device according to the embodiment.
FIG. 8 is a flowchart illustrating other operations performed by the electronic device according to the embodiment.
FIG. 9 is a diagram illustrating an example of an operation performed by the electronic device according to the embodiment.
FIG. 10 is a diagram illustrating an example of another operation performed by the electronic device according to the embodiment.

### DESCRIPTION OF EMBODIMENTS

A technique for appropriately detecting a certain object by receiving a reflected wave, which is a transmission wave transmitted to and reflected from a certain object, is desired. An object of the present disclosure is to provide an electronic device, a method for controlling an electronic device, and a program capable of appropriately detecting an object. According to an embodiment, an electronic device capable of appropriately detecting an object, a method for controlling the electronic device, and a program can be provided. The embodiment will be described in detail hereinafter with reference to the drawings.

In the embodiment, for example, the electronic device is mounted on a vehicle (mobile body) such as an automobile and can detect a certain object around the mobile body as a target. For this purpose, in the embodiment, the electronic device is capable of transmitting transmission waves around the mobile body from transmission antennas provided for the mobile body. In the present embodiment, the electronic device is also capable of receiving reflected waves, which are reflected transmission waves, with reception antennas provided for the mobile body. A radar sensor or the like provided for the mobile body, for example, may include at least the transmission antennas or the reception antennas.

A configuration where the electronic device according to the embodiment is mounted on an automobile such as a passenger car will be described hereinafter as a typical example. In the embodiment, however, the electronic device need not necessarily be mounted on an automobile. In the embodiment, the electronic device may be mounted on one of various mobile bodies including automated cars, buses, cabs, trucks, cabs, motorcycles, bicycles, ships, aircraft, helicopters, agricultural apparatuses such as tractors, snowplows, sweepers, police cars, ambulances, and drones. In the embodiment, the electronic device need not necessarily be mounted on a mobile body that moves under its own power. For example, in the embodiment, the mobile body on which the electronic device is mounted may be a trailer towed by a tractor. In the embodiment, the electronic device need not necessarily be mounted on a mobile body. For example, in the embodiment, the electronic device may be attached to or built in another device fixed to the ground. For example, in the embodiment, the electronic device may be fixed to the ground or the like.

In the embodiment, the electronic device is capable of measuring a distance or the like between a sensor and a certain object in a situation where at least the sensor or the certain object can move. In the embodiment, the electronic device is capable of measuring a distance or the like between the sensor and an object even if both the sensor and the object are stationary. Automobiles included in the present disclosure are not limited by overall length, overall width, overall height, displacement, passenger capacity, load capacity, or the like. For example, the automobiles included in the present disclosure include automobiles with a displacement of greater than 660 cc and automobiles with a displacement of 660 cc or smaller, such as so-called light automobiles. The automobiles included in the present disclosure include automobiles that use electricity as part or all of energy therefor and that use motors.

### (Configuration of Electronic Device According to Embodiment)

An example of detection of an object performed by the electronic device according to the embodiment will be described.

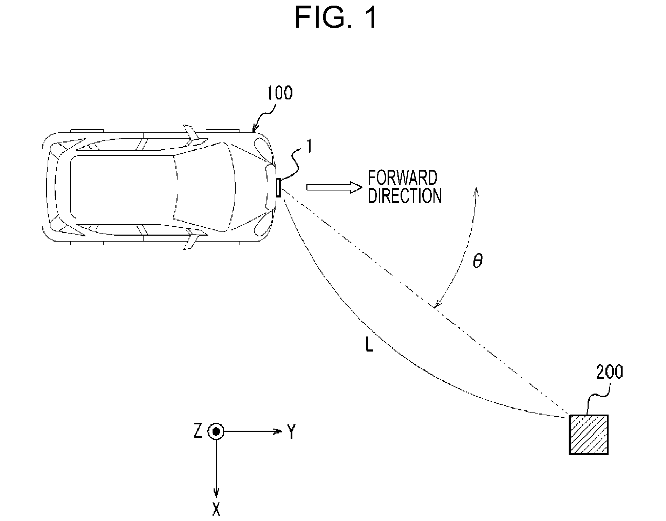

FIG. 1 is a diagram illustrating a use mode of the electronic device according to the embodiment. FIG. 1 illustrates an example where the electronic device including the transmission antennas and the reception antennas according to the embodiment is provided for a mobile body.

A mobile body 100 illustrated in FIG. 1 is provided with an electronic device 1 including transmission antennas and reception antennas according to the embodiment. The mobile body 100 illustrated in FIG. 1 may include (e.g., incorporate) the electronic device 1 according to the embodiment. A specific configuration of the electronic device 1 will be described later. As described later, the electronic device 1 may include, for example, at least transmission antennas or reception antennas. The mobile body 100 illustrated in FIG. 1 may be an automobile such as a passenger car, but may be a mobile body of any type. In FIG. 1, for example, the mobile body 100 may move (run or go slowly) in a positive direction of a Y-axis (forward direction) illustrated in the figure or another direction or be stationary without moving.

As illustrated in FIG. 1, the mobile body 100 is provided with the electronic device 1 including the transmission antennas. In the example illustrated in FIG. 1, only one electronic device 1 including transmission antennas and reception antennas is provided in front of the mobile body 100. Here, a position on the mobile body 100 at which the electronic device 1 is provided is not limited to that illustrated in FIG. 1, and may be another position, instead. For example, the electronic device 1 illustrated in FIG. 1 may be provided on the left, right, and/or back of the mobile body 100. The number of electronic devices 1 may be one or more in accordance with various conditions (requirements), such as a measurement range and/or accuracy, of the mobile body 100. The electronic device 1 may be provided inside the mobile body 100, instead. The inside of the mobile body 100 may refer to, for example, a space inside a bumper, a space inside a body, a space inside a headlight, a driving space, or the like.

The electronic device 1 transmits electromagnetic waves from the transmission antennas as transmission waves. When a certain object (e.g., an object 200 illustrated in FIG. 1) exists around the mobile body 100, for example, at least a subset of transmission waves transmitted from the electronic device 1 is reflected from the object and becomes reflected waves. The reception antennas of the electronic device 1, for example, receive such reflected waves, and the electronic device 1 mounted on the mobile body 100 can detect the object as a target.

The electronic device 1 including the transmission antennas may typically be a radar (radio detecting and ranging) sensor that transmits and receives radio waves. The electronic device 1, however, is not limited to a radar sensor. In the embodiment, the electronic device 1 may be a sensor based on a technique of lidar (light detection and ranging, laser imaging detection and ranging) that employs light waves, instead. Such a sensor may include, for example, a patch sensor. Since the techniques of radar and lidar are already known, more detailed description might be simplified or omitted as appropriate.

The electronic device 1 mounted on the mobile body 100 illustrated in FIG. 1 receives, from the reception antennas, reflected waves of transmission waves transmitted from the transmission antennas. The electronic device 1 can thus detect a certain object 200 within a certain distance from the mobile body 100 as a target. As illustrated in FIG. 1, for example, the electronic device 1 can measure a distance L between the mobile body 100, which is a vehicle on which the electronic device 1 is mounted, and the certain object 200. The electronic device 1 is also capable of measuring relative velocity between the mobile body 100, which is the vehicle, and the certain object 200. The electronic device 1 is also capable of measuring directions (arrival angles θ) in which waves reflected from the certain object 200 arrive at the mobile body 100, which is the vehicle.

Here, the object 200 may be, for example, at least an oncoming vehicle running in a lane adjacent to one in which the mobile body 100 is running, an automobile running alongside the mobile body 100, an automobile ahead of or behind the mobile body 100 running in the same lane as the mobile body 100, or the like. The object 200 may be any object around the mobile body 100, such as a motorcycle, a bicycle, a stroller, a pedestrian or another person, an animal, an insect, or another life form, a guardrail, a median, a road sign, a sidewalk step, a wall, a manhole, or an obstacle. The object 200 may be moving or stationary. For example, the object 200 may be an automobile parked or stationary around the mobile body 100.

A ratio of size of the electronic device 1 to size of the mobile body 100 illustrated in FIG. 1 is not necessarily an actual ratio. In FIG. 1, the electronic device 1 is provided outside the mobile body 100. In the embodiment, however, the electronic device 1 may be provided at one of various positions on the mobile body 100. In the embodiment, for example, the electronic device 1 may be provided inside the bumper of the mobile body 100 and invisible from the outside of the mobile body 100.

A typical example will be described hereinafter where the transmission antennas of the electronic device 1 are assumed to transmit radio waves in a frequency band of millimeter waves (30 GHz or higher) or a submillimeter waves (e.g., around 20 to 30 GHz). For example, the transmission antennas of a sensor 5 may transmit radio waves having a frequency bandwidth of 4 GHz ranging from, say, 77 to 81 GHz.

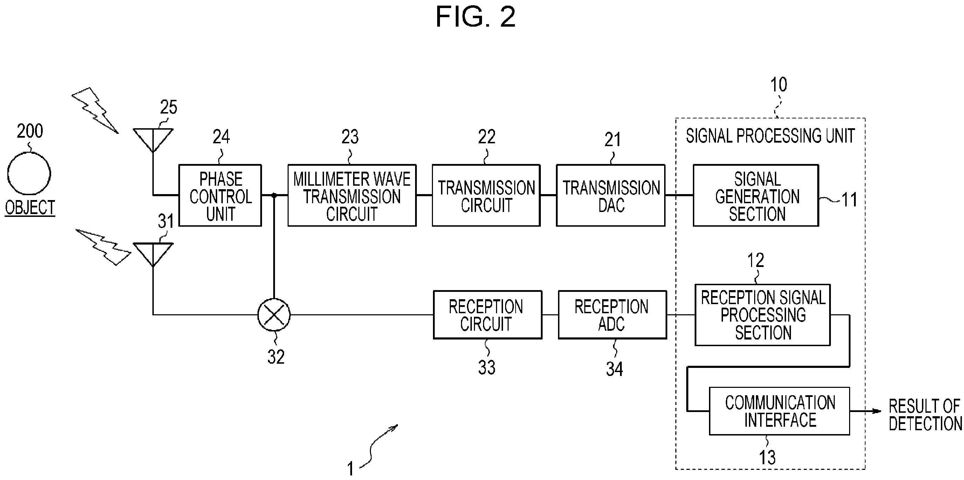

FIG. 2 is a functional block diagram schematically illustrating an example of configuration of the electronic device 1 according to the embodiment. The example of the configuration of the electronic device 1 according to the embodiment will be described hereinafter.

When a millimeter-wave radar measures a distance or the like, a frequency-modulated continuous wave radar (hereinafter referred to as an FMCW radar) is often used. The FMCW radar generates a transmission signal by sweeping frequency of a radio wave to be transmitted. In the case of a millimeter-wave FMCW radar that employs a radio wave in a frequency band around, say, 79 GHz, therefore, frequency of the radio waves used has a frequency bandwidth of 4 GHz ranging from, say, 77 to 81 GHz. A wider frequency bandwidth is available for a radar with a frequency band around 79 GHz than other millimeter-wave or submillimeter-wave radars with a frequency band around, say, 24 GHz, 60 GHz, or 76 GHz. Such an embodiment will be described hereinafter as an example.

As illustrated in FIG. 2, in the embodiment, the electronic device 1 includes a signal processing unit 10. The signal processing unit 10 may include a signal generation section 11, a reception signal processing section 12, and a communication interface 13. In the embodiment, the electronic device 1 also includes, as a transmitter, a transmission DAC 21, a transmission circuit 22, a millimeter wave transmission circuit 23, a phase control unit 24, and a transmission antenna array 25. In the embodiment, the electronic device 1 also includes, as a receiver, a reception antenna array 31, a mixer 32, a reception circuit 33, and a reception ADC 34. In the embodiment, the electronic device 1 need not include at least one of the function units illustrated in FIG. 2 and may include function units other than those illustrated in FIG. 2. The electronic device 1 illustrated in FIG. 2 may be achieved using a circuit configured in basically the same manner as a general radar that employs electromagnetic waves in a millimeter-wave band or the like. In the electronic device 1 according to the embodiment, on the other hand, signal processing performed by the signal processing unit 10 includes processing different from that performed by a general conventional radar.

In the embodiment, the signal processing unit 10 included in the electronic device 1 can control operation of the entirety of the electronic device 1 such as control of the function units of the electronic device 1. In particular, the signal processing unit 10 performs various types of processing on signals handled by the electronic device 1. The signal processing unit 10 may include at least one processor, such as a CPU (central processing unit) or a DSP (digital signal processor), in order to provide control and processing capability for achieving various functions. The signal processing unit 10 may be collectively achieved by a single processor or some processors, or different parts of the signal processing unit 10 may be individually achieved by different processors. The processor may be achieved as a single integrated circuit. The integrated circuit is abbreviated as an IC. The processor may be achieved as a plurality of integrated circuits and discrete circuits communicably connected to one another. The processor may be achieved by one of various other known techniques. In the embodiment, the signal processing unit 10 may be achieved, for example, as a CPU (hardware) and a program (software) executed by the CPU. The signal processing unit 10 may include a memory necessary to operate the signal processing unit 10 as appropriate.

The signal generation section 11 of the signal processing unit 10 generates signals to be transmitted from the electronic device 1. In the electronic device 1 according to the embodiment, the signal generation section 11 may generate transmission signals (transmission chirp signals) such as chirp signals. In particular, the signal generation section 11 may generate signals (linear chirp signals) whose frequencies linearly change periodically. For example, the signal generation section 11 may generate chirp signals whose frequencies linearly increase periodically from 77 to 81 GHz over time. Alternatively, for example, the signal generation section 11 may generate signals whose frequencies repeatedly linearly increase (up-chirp) and decrease (down-chirp) periodically between 77 and 81 GHz over time. The signals generated by the signal generation section 11 may be set in advance, for example, by the signal processing unit 10. The signals generated by the signal generation section 11 may be stored in advance, for example, in a storage unit of the signal processing unit 10. Since chirp signals used in a technical field of radar are known, more detailed description will be simplified or omitted as appropriate. The signals generated by the signal generation section 11 are supplied to the transmission DAC 21. The signal generation section 11, therefore, may be connected to the transmission DAC 21.

The transmission DAC (digital-to-analog converter) 21 has a function of converting digital signals supplied from the signal generation section 11 into analog signals. The transmission DAC 21 may include a general digital-to-analog converter. The analog signals obtained by the transmission DAC 21 are supplied to the transmission circuit 22. The transmission DAC 21, therefore, may be connected to the transmission circuit 22.

The transmission circuit 22 has a function of converting bands of analog signals obtained by the transmission DAC 21 into an intermediate frequency (IF) band. The transmission circuit 22 may include a general IF-band transmission circuit. The signals processed by the transmission circuit 22 are supplied to the millimeter wave transmission circuit 23. The transmission circuit 22, therefore, may be connected to the millimeter wave transmission circuit 23.

The millimeter wave transmission circuit 23 has a function of transmitting signals processed by the transmission circuit 22 as millimeter waves (RF waves). The millimeter wave transmission circuit 23 may include a general millimeter wave transmission circuit. The signals processed by the millimeter wave transmission circuit 23 are supplied to the phase control unit 24. The millimeter wave transmission circuit 23, therefore, may be connected to the phase control unit 24. The signals processed by the millimeter wave transmission circuit 23 are also supplied to the mixer 32. The millimeter wave transmission circuit 23, therefore, therefore, may also be connected to the mixer 32.

The phase control unit 24 controls (adjusts) phases of transmission signals supplied from the millimeter wave transmission circuit 23. More specifically, the phase control unit 24 may adjust the phases of the transmission signals supplied from the millimeter wave transmission circuit 23, for example, by advancing or retarding the phases of the signals under control of the signal processing unit 10 or the like. In this case, the phase control unit 24 may adjust the phases of the transmission signals on the basis of path differences between transmission waves T transmitted from the plurality of transmission antennas (transmission antenna array 25). The phase control unit 24 appropriately adjusts the phases of the transmission signals, and the transmission waves T transmitted from the transmission antenna array 25 form a beam (beamforming) by strengthening one another in a certain direction. In this case, a correlation between the direction of the beamforming and the amount of phase of the transmission signal transmitted from each of the plurality of transmission antennas included in the transmission antenna array 25 may be stored, for example, in any memory. The phase control unit 24 may include, for example, any phase shifter or the like. The transmission signals whose phases have been controlled by the phase control unit 24 may be supplied to the transmission antenna array 25. The phase control unit 24 may be provided at any appropriate position instead of a position downstream of the millimeter wave transmission circuit 23. For example, the phase control unit 24 may be provided inside the signal generation section 11 and add phases corresponding to the plurality of transmission antennas to transmission signals in advance.

In the transmission antenna array 25, a plurality of transmission antennas is arranged in an array. In FIG. 2, configuration of the transmission antenna array 25 is simplified. The transmission antenna array 25 transmits signals processed by the millimeter wave transmission circuit 23 and subjected to phase control performed by the phase control unit 24 to the outside of the electronic device 1. The transmission antenna array 25 may include a transmission antenna array used in a general millimeter-wave radar.

In the embodiment, the electronic device 1 thus includes the transmission antennas (transmission antenna array 25) and can transmit transmission signals (e.g., transmission chirp signals) from the transmission antenna array 25 as transmission waves.

For example, an object 200 is assumed to exist around the electronic device 1 as illustrated in FIG. 2. In this case, the object 200 reflects at least a subset of transmission waves transmitted from the transmission antenna array 25. Among the transmission waves transmitted from the transmission antenna array 25, at least part of the transmission waves reflected from the object 200 can be reflected toward the reception antenna array 31.

The reception antenna array 31 receives reflected waves. Here, the reflected waves may be at least part of transmission waves transmitted from the transmission antenna array 25 and reflected from the object 200.

In the reception antenna array 31, a plurality of reception antennas is arranged in an array. In FIG. 2, configuration of the reception antenna array 31 is simplified. The reception antenna array 31 receives reflected waves, which are transmission waves transmitted from the transmission antenna array 25 and reflected. The reception antenna array 31 may include a reception antenna array used in a general millimeter-wave radar. The reception antenna array 31 supplies the reception signals received as reflected waves to the mixer 32. The reception antenna array 31, therefore, may be connected to the mixer 32.

The mixer 32 converts bands of signals (transmission signals) processed by the millimeter wave transmission circuit 23 and reception signals received by the reception antenna array 31 into an intermediate frequency (IF) band. The mixer 32 may include a mixer used in a general millimeter-wave radar. The mixer 32 supplies signals generated as a result of the mixing to the reception circuit 33. The mixer 32, therefore, may be connected to the reception circuit 33.

The reception circuit 33 has a function of converting signals in the IF band obtained as a result of conversion performed by the mixer 32 into analog signals. The reception circuit 33 may include a reception circuit that converts bands into a general IF band. The signals processed by the reception circuit 33 are supplied to the reception ADC 34. The reception circuit 33, therefore, may be connected to the reception ADC 34.

The reception ADC (analog-to-digital converter) 34 has a function of converting analog signals supplied from the reception circuit 33 into digital signals. The reception ADC 34 may include a general analog-to-digital converter. The digital signals obtained by the reception ADC 34 are supplied to the reception signal processing section 12 of the signal processing unit 10. The reception ADC 34, therefore, may be connected to the signal processing unit 10.

The reception signal processing section 12 of the signal processing unit 10 has a function of performing various types of processing on digital signals supplied from the reception DAC 34. For example, the reception signal processing section 12 calculates a distance from the electronic device 1 to the object 200 on the basis of the digital signals supplied from the reception DAC 34 (distance measurement). The reception signal processing section 12 also calculates velocity of the object 200 relative to the electronic device 1 on the basis of the digital signals supplied from the reception DAC 34 (velocity measurement). The reception signal processing section 12 also calculates an azimuth of the object 200 viewed from the electronic device 1 on the basis of the digital signals supplied from the reception DAC 34 (azimuth measurement). More specifically, data subjected to I/Q modulation may be input to the reception signal processing section 12. As the data is input, the reception signal processing section 12 performs a fast Fourier transform in a range direction and a velocity direction (2D-FFT). Thereafter, the reception signal processing section 12 suppresses false alarms and achieves a constant probability through elimination of noise points based on processing such as CFAR (constant false alarm rate). The reception signal processing section 12 then obtains a position of the object 200 by performing arrival angle estimation for points that satisfy criteria of the CFAR. Information generated as a result of the distance measurement, the velocity measurement, and the azimuth measurement performed by the reception signal processing section 12 may be supplied to the communication interface 13. The signal processing unit 10 may use a UART (universal asynchronous receiver-transmitter) as an interface for transmitting data.

The communication interface 13 of the signal processing unit 10 includes an interface that outputs information regarding the signal processing unit 10 to, for example, an external device or the like. The communication interface 13 may output information regarding at least the position, velocity, or an angle of the object 200, for example, to the outside of the signal processing unit 10 as a signal of a CAN (controller area network). The information regarding at least the position, the velocity, or the angle of the object 200 is supplied to the outside of the electronic device 1 through the communication interface 13. The communication interface 13 may also supply, to the outside of the electronic device 1, a result (detection result) of detection of an object performed by the signal processing unit 10.

As illustrated in FIG. 2, in the embodiment, the electronic device 1 may output a result of detection performed by the signal processing unit 10 to an external device such as an ECU (electronic control unit). Here, the external device may control, for example, various operations performed by the mobile body 100. In this case, the external device may include at least one ECU.

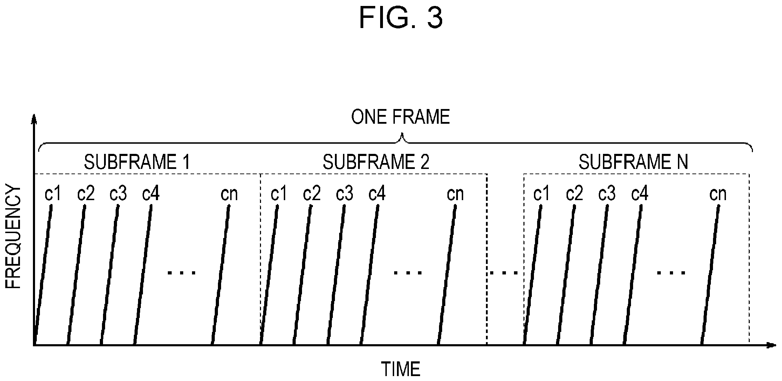

FIG. 3 is a diagram illustrating an example of chirp signals generated by the signal generation section 11 of the signal processing unit 10.

FIG. 3 illustrates a temporal structure of one frame at a time when an FCM (fast-chirp modulation) method is used. FIG. 3 illustrates an example of reception signals based on the FCM method. FCM is a method where chirp signals, which are denoted by c1, c2, c3, c4, ..., and cn in FIG. 3, are repeated at short intervals (e.g., longer than or equal to round-trip time between a radar for electromagnetic waves and an object target calculated from a maximum ranging distance). In FCM, processing for transmission and reception is often performed while classifying reception signals into subframes as illustrated in FIG. 3 for convenience of signal processing.

In FIG. 3, a horizontal axis represents elapse of time, and a vertical axis represents frequency. In the example illustrated in FIG. 3, the signal generation section 11 generates linear chirp signals whose frequencies linearly change periodically. In FIG. 3, the chirp signals are denoted by c1, c2, c3, c4, ..., and cn. As illustrated in FIG. 3, the frequency of each chirp signal linearly increases over time.

In the example illustrated in FIG. 3, several chirp signals, such as c1, c2, c3, c4, ..., and cn, are included in a single subframe. That is, subframe 1, subframe 2, and other subframes illustrated in FIG. 3 each include several chirp signals, such as c1, c2, c3, c4, ..., and cn. In the example illustrated in FIG. 3, several subframes, such as subframe 1, subframe 2, ..., and subframe N, are included in a single frame (one frame). That is, the one frame illustrated in FIG. 3 includes N subframes. The one frame illustrated in FIG. 3 may be defined as frame 1, and frame 2, frame 3, and other frames may follow. These frames may each include N subframes as with frame 1. Frame intervals of a certain length may be included between frames. The one frame illustrated in FIG. 3 may last, for example, 30 to 50 milliseconds.

In the electronic device 1 according to the embodiment, the signal generation section 11 may generate transmission signals as any number of frames. In FIG. 3, some chirp signals are omitted. A relationship between time of transmission signals generated by the signal generation section 11 and frequency may be stored, for example, in the storage unit of the signal processing unit 10 or the like.

In the embodiment, the electronic device 1 may thus transmit transmission signals that each include a subframe including a plurality of chirp signals. In the embodiment, the electronic device 1 may transmit transmission signals that each include a frame including a certain number of subframes.

In the following description, the electronic device 1 is assumed to transmit transmission signals having the frame structure illustrated in FIG. 3. The frame structure illustrated in FIG. 3, however, is an example, and, for example, any number of chirp signals may be included in each subframe. That is, in the embodiment, the signal generation section 11 may generate a subframe including any number (e.g., a plurality) of chirp signals. The subframe structure illustrated in FIG. 3, too, is an example, and, for example, any number of subframes may be included in one frame. That is, in the embodiment, the signal generation section 11 may generate a frame including any number (a plurality) of subframes. The signal generation section 11 may generate signals of different frequencies. The signal generation section 11 may generate a plurality of discrete signals whose frequencies f have different bandwidths.

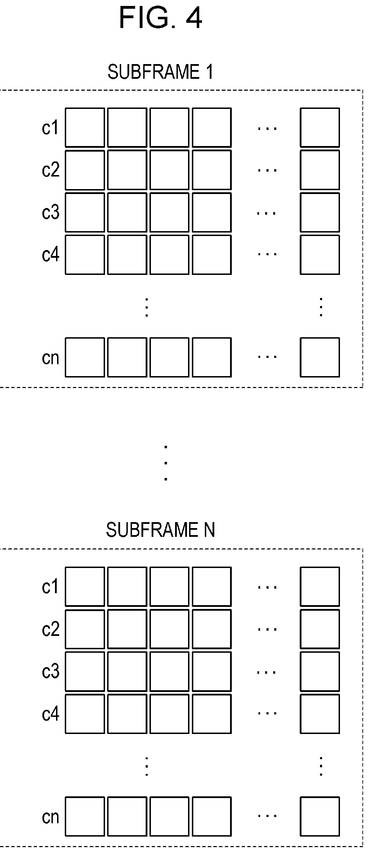

FIG. 4 is a diagram illustrating a subset of the subframes illustrated in FIG. 3 in another mode. FIG. 4 illustrates samples of reception signals that are the transmission signals illustrated in FIG. 3 received after a 2D-FFT (two-dimensional fast Fourier transform), which is processing performed by the reception signal processing section 12 (FIG. 2) of the signal processing unit 10, is performed.

As illustrated in FIG. 4, the chirp signals c1, c2, c3, c4, ..., and cn are stored in each of the subframes including subframe 1, ..., and subframe N. In FIG. 4, the chirp signals c1, c2, c3, c4, ..., and cn include samples indicated by squares arranged in a horizontal direction. The reception signal processing section 12 illustrated in FIG. 2 performs the 2D-FFT, CFAR, and integrated signal processing for each subframe on the reception signals illustrated in FIG. 4.

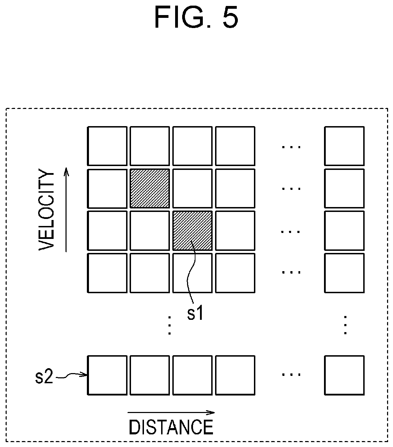

FIG. 5 is a diagram illustrating an example of point groups on a range-Doppler (distance-velocity) plane calculated as a result of the 2D-FFT, the CFAR, and the integrated signal processor for each subframe performed by the reception signal processing section 12 illustrated in FIG. 2.

In FIG. 5, the horizontal direction represents range (distance), and a vertical direction represents velocity. Filled point groups s1 illustrated in FIG. 5 are point groups indicating signals exceeding a threshold in the CFAR. Unfilled point groups s2 illustrated in FIG. 5 are bins (2D-FFT samples) without a point group where the threshold is not exceeded in the CFAR. Directions of point groups on the range-Doppler plane calculated in FIG. 5 from the radar are calculated through direction estimation, and positions and velocity on a two-dimensional plane are calculated as point groups indicating the object 200. Here, the direction estimation may be calculated using a beamformer and/or a subspace method. Representative algorithms for the subspace method include MUSIC (multiple signal classification) and ESPRIT (estimation of signal parameters via rotation invariance technique).

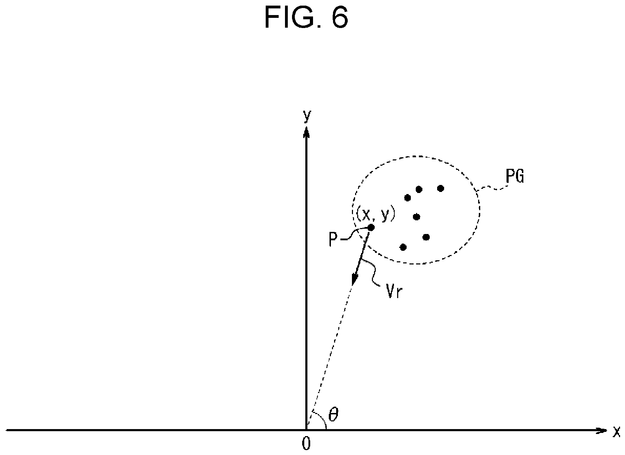

FIG. 6 is a diagram illustrating an example of a result of conversion, after the direction estimation, from the range-Doppler plane illustrated in FIG. 5 into an X-Y plane. As illustrated in FIG. 6, the reception signal processing section 12 is capable of plotting a point group PG on the X-Y plane. Here, the point group PG includes points P. The points P each have an angle θ and a radial velocity Vr in polar coordinates.

The reception signal processing section 12 detects objects within a range of transmission of transmission waves T on the basis of at least a result of the 2D-FFT or a result of angle estimation. The reception signal processing section 12 may perform object detection by performing clustering, for example, on the basis of information regarding estimated distances, information regarding estimated velocities, and angle information. As an algorithm used to cluster (group) data, DBSCAN (density-based spatial clustering of applications with noise), for example, is known. This is an algorithm for performing clustering based on density. In the clustering, average power of points constituting an object to be detected, for example, may be calculated. The information regarding distances to an object, the information regarding velocities of the object, the angle information regarding the object, and information regarding power of the object detected by the reception signal processing section 12 may be supplied, for example, to an external device or the like. If the mobile body 100 is an automobile in this case, for example, communication may be performed through the communication interface 13 such as a CAN (controller area network).

As described above, the electronic device 1 may include the transmission antennas (transmission antenna array 25), the reception antennas (reception antenna array 31), the signal processing unit 10, and the phase control unit 24. The transmission antennas (transmission antenna array 25) transmit transmission waves T. The reception antennas (reception antenna array 31) receive reflected waves R, which are reflected transmission waves T. The phase control unit 24 controls radiation patterns of transmission waves transmitted from the transmission antenna array 25. For example, the phase control unit 24 may control (vary) a phase of a transmission wave transmitted from at least one of the transmission antennas included in the transmission antenna array 25. The signal processing unit 10 then detects an object (e.g., the object 200 etc.) that reflects the transmission waves T from around the electronic device 1 on the basis of transmission signals transmitted as the transmission waves T and reception signals received as the reflected waves R.

In order to describe operations performed by the electronic device 1 according to the embodiment, detection of objects in general radar techniques will be examined.

In the embodiment, the electronic device 1 may detect an object that reflects transmission waves from around the electronic device 1 by receiving reflected waves, which are the reflected transmission waves, once. Here, receiving reflected waves "once" may refer to, in the case of a millimeter wave radar, for example, receiving one unit (e.g., one frame) of certain radiation patterns of radio waves radiated from the transmission antennas. In this case, the one unit of the certain radiation patterns of radio waves may have the same radiation patterns as those of a next unit. The same may hold for later units. Such object detection is employed in various scenes using, for example, millimeter wave radars.

Problems such as false negatives and false positives are generally known with respect to object detection based on techniques of millimeter wave radars. Here, false negatives may mean that targets to be detected are not detected, and false positives may mean that targets not to be detected are detected. Excessive reduction of sensitivity of a radar sensor can cause false negatives, and excessive increase of the sensitivity of a radar sensor can cause false positives. The problem of false positives is thus in a tradeoff relationship with a detection rate of obj ects.

In general, when a radar sensor such as a millimeter wave radar detects an object, detection signals include noise (noise points). As described above, when a target object is detected by receiving reflected waves, which are reflected transmission waves, once, noise can be caused depending on a surrounding environment. Causes of such noise include, for example, presence of objects not to be detected as targets, an effect of multipath, and/or specifications (characteristics) of the radar sensor. If a wave reflected from a target object is further reflected from another object and propagates through a plurality of paths (multipath), for example, the object might be undesirably detected as a plurality of objects.

If the above-described noise is caused in a radar sensor, processing such as clustering can be affected, resulting in a decrease in accuracy of detecting an object. The above-described noise, for example, can affect processing performed when an object is detected, such as the above-described DBSCAN.

In clustering such as DBSCAN, for example, noise points at some distance from a certain cluster are not included in the cluster. When a representative point of a point group included in the cluster is calculated, therefore, the noise points do not affect a position of the representative point. Here, a representative point of a point group included in a cluster may be based on one of various calculation methods, that is, may be a point calculated as averages of X and Y coordinates of points included in the point group (cluster). Noise points within some distance from a certain cluster, on the other hand, might be undesirably included in the cluster. When a representative point of a point group included in the cluster is calculated, therefore, the noise points can affect a position of the representative point. When clustering such as common DBSCAN is performed, therefore, a position of a representative point of a cluster can be affected by noise points. In common clustering, therefore, accuracy of detecting an object can decrease due to an effect of noise points.

In view of the above-described circumstances, in the embodiment, the electronic device 1 takes measures for improving the accuracy of detecting an object. In the embodiment, the electronic device 1 (1) transmits transmission waves from the transmission antennas a plurality of times while including transmission where the radiation patterns of the transmission waves are slightly varied in a relatively short period of time. Here, "varying the radiation patterns of transmission waves" may include varying phases of the transmission waves. In the embodiment, the electronic device 1 also (2) calculates a result of detection by selecting appropriate point groups (or excluding inappropriate point groups) when performing signal processing on the basis of reflected waves received the plurality of times. As a result, in the embodiment, the electronic device 1 can improve the accuracy of detecting an object. With the electronic device 1 according to the embodiment, therefore, objects can be appropriately detected. Such an embodiment will be further described hereinafter.

The item (1) will be described,
As illustrated in FIG. 3, for example, in the embodiment, the electronic device 1 successively transmits transmission waves a plurality of times in units of one frame (or one subframe) or the like. The transmission waves transmitted in units of one frame (or one subframe) or the like are reflected from an object and become reflected waves. In the embodiment, therefore, the electronic device 1 detects the object by receiving reflected waves, which are the transmission waves successively reflected a plurality of times, in units of one frame (or one subframe) or the like.

When transmission waves are successively transmitted a plurality of times in units of one frame or the like, the transmission waves are assumed to be transmitted the plurality of times without a radiation pattern of each transmission wave varied (i.e., the transmission waves are transmitted the plurality of times in the same radiation patterns). In this case, even when reflected waves, which are the transmission waves successively reflected a plurality of times, are received, the reflected waves are expected to hardly vary and substantially the same result of detection will be obtained.

In the embodiment, on the other hand, the electronic device 1 may vary radiation patterns of transmission waves at least once when successively transmitting the transmission waves a plurality of times in units of one frame or the like. As a result, in the embodiment, the electronic device 1 can detect the same object the plurality of times from different perspectives as an object having different properties. When varying the radiation patterns of the transmission waves, the phase control unit 24 of the electronic device 1 may vary, for example, a phase of a transmission wave transmitted from at least one of the transmission antennas included in the transmission antenna array 25.

When all the transmission antennas included in the transmission antenna array 25 transmit transmission waves in the same phase (in-phase), for example, the transmission waves propagate in a direction (referred to as a forward direction) perpendicular to a direction in which the transmission antennas are arranged in an array. In this case, wavefronts of the transmission waves are parallel to the direction in which the transmission antennas are arranged in an array. That is, a radiation direction of the transmission waves is perpendicular to the direction in which the transmission antennas are arranged in an array.

When a phase of a transmission wave transmitted from at least one of the transmission antennas included in the transmission antenna array 25 is slightly different from phases of transmission waves transmitted from the other transmission antennas, on the other hand, the transmission wave propagates in a direction slightly deviated from the forward direction. In this case, a wavefront of the transmission wave is not parallel to the direction in which the transmission antennas are arranged in an array. That is, a radiation direction of the transmission wave is not perpendicular to the direction in which the transmission antennas are arranged in an array.

The radiation direction of the transmission wave varies because the difference between the phases of the transmission waves transmitted from the transmission antennas causes a difference between distances over which the transmission waves propagate. A difference between phases of transmission waves transmitted from a plurality of transmission antennas may be controlled as a difference between times at which the transmission waves are transmitted.

As described above, when transmission waves transmitted a plurality of times in different radiation patterns are reflected from an object, the electronic device 1 can receive waves reflected from the object as different reflected waves. In the embodiment, the electronic device 1 can thus detect an object from a plurality of perspectives since waves reflected from the same object can be made different from one another by varying radiation patterns of transmission waves. If a direction of light radiated onto the same object differs, for example, the object might be recognized as a visually different image. In the embodiment, the electronic device 1 may detect the same object in different modes by varying a mode of transmission waves to be transmitted on a principle similar to that behind such a phenomenon.

In the electronic device 1 according to the embodiment, when transmission waves are transmitted a plurality of times in certain units, the phase control unit 24 may thus perform control such that transmission waves whose radiation patterns are varied are included at least once. For example, in the electronic device 1 according to the embodiment, when transmission waves are transmitted a plurality of times in certain units, the phase control unit 24 may perform control such that transmission waves whose phases are varied are included at least once. In this case, the phase control unit 24 may control (vary) a phase of a transmission wave transmitted from at least one of the transmission antennas included in the transmission antenna array 25.

In the embodiment, the phase control unit 24 may perform control such that transmission waves whose radiation patterns are varied are included more than once, that is, twice or more. In the embodiment, the phase control unit 24 may perform control such that radiation patterns of transmission waves are varied every time. Such variations in radiation patterns may be small variations that are constant every time or different small variations, that is, for example, small variations that are randomly different every time.

As described above, in the embodiment, the electronic device 1 varies a radiation direction of a transmission wave transmitted from at least one of the transmission antennas included in the transmission antenna array 25 by varying a phase of the transmission wave. If the radiation direction of the transmission wave is greatly varied in this case, transmission waves might not be reflected from the same object and can be reflected from different objects. That is, in this case, different objects might be undesirably detected using the transmission waves transmitted a plurality of times. In the embodiment, therefore, when varying a phase of a transmission wave transmitted from at least one of the transmission antennas included in the transmission antenna array 25, the electronic device 1 may keep a radiation direction of the transmission wave from exceeding a certain value as a result of variation. An allowable value for variation in a radiation direction of a transmission wave may be specified in various ways depending on a detection target and/or an environment. The allowable value for variation in a radiation direction of a transmission wave may be, for example, a range of 1° to 3°. In another example, the allowable value for variation in a radiation direction of a transmission wave may be a range of 0.5° to 5°. In yet another example, the allowable value for variation in a radiation direction of a transmission wave may be a range of up to ten odd degrees. In the electronic device 1 according to the embodiment, the phase control unit 24 may thus vary a phase of a transmission wave such that a radiation direction of the transmission wave varies within a range of 1° to 15°.

As described above, when a transmission pattern or a phase of a transmission wave is varied, for example, the transmission pattern or the phase may be varied from a default value by a certain small value or a random small value that is different every time.

In the embodiment, when transmitting the above-described transmission waves a plurality of times in certain units, the electronic device 1 may transmit the transmission waves the plurality of times within a short period of time such as one frame. By transmitting the transmission waves the plurality of times within a relatively short period of time such as 50 ms, an object to be detected can be detected before the object moves significantly. In the embodiment, the electronic device 1 may thus transmit transmission waves a plurality of times in one frame in certain units. In a simple case, for example, transmission waves that make up one unit in one frame may be transmitted a plurality of times.

The item (2) will be described.

In the above item (2), the electronic device 1 according to the embodiment performs signal processing on the basis of reflected waves received a plurality of times. In the signal processing, the electronic device 1 according to the embodiment performs processing for reducing noise.

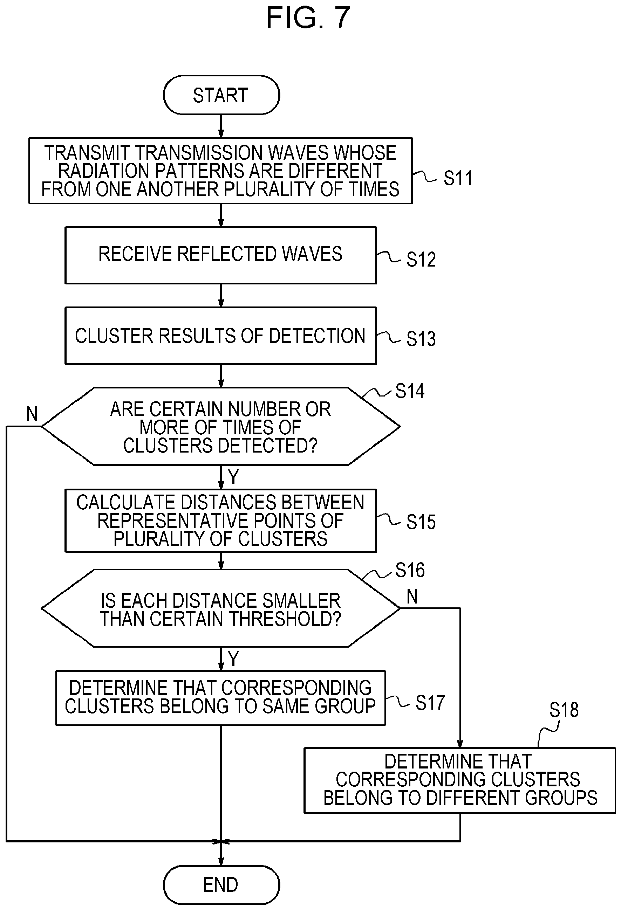

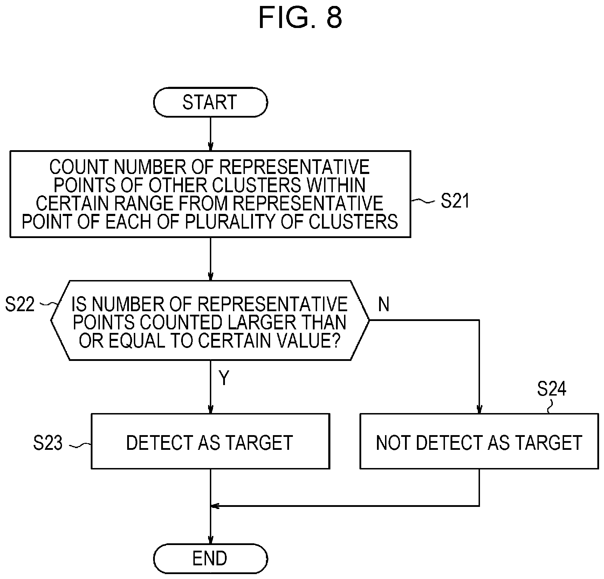

FIGs. 7 and 8 are flowcharts illustrating operations performed by the electronic device 1 according to the embodiment. FIG. 7 illustrates operations from transmission of transmission waves by the electronic device 1 to preliminary processing for performing signal processing for detecting an object. FIG. 8 illustrates object detection according to the embodiment performed on the basis of a result of the preliminary processing illustrated in FIG. 7. The operations performed by the electronic device 1 according to the embodiment will be described hereinafter with reference to FIGs. 7 and 8.

In the embodiment, when the operations illustrated in FIG. 7 start, the electronic device 1 transmits transmission waves whose radiation patterns are different from one another a plurality of times as described above (step S11). In step S11, the electronic device 1 transmits the transmission waves the plurality of times in a short period of time such as one frame while varying the radiation patterns (phases) of the transmission waves. The operation in step S11 has already been described, and more detailed description is omitted.

After transmitting the transmission waves in step S11, the electronic device 1 receives reflected waves (step S12). In step S11, the electronic device 1 has transmitted the transmission waves the plurality of times. In step S12, therefore, the electronic device 1 receives the reflected waves, which are the transmission waves reflected from an object, the plurality of times.

After the reflected waves are received in step S12, the signal processing unit 10 of the electronic device 1 performs clustering on reception signals based on the reflected waves, that is, results of detection of the object (step S13). The clustering performed in step S13 may be the above-described DBSCAN, for example, but is not limited to this. For convenience of description, DBSCAN is assumed to be performed as the clustering in step S13. The processing in step S13 may be performed, for example, by the reception signal processing section 12 of the signal processing unit 10. The same holds for processing after step S13. In step S13, the signal processing unit 10 may perform arithmetic processing of the clustering on each of the reception signals received the plurality of times, that is, each of results of detection performed the plurality of times.

After performing the clustering in step S13, the signal processing unit 10 determines whether a certain number or more of times of clusters have been detected (step S14). If no clusters have been detected in a first detection operation and clusters have been detected in second and third detection operations, the signal processing unit 10 may determine in step S14 that two times of clusters have been detected. In step S14, the signal processing unit 10 may also determine whether a certain number or more of times of clusters necessary for later processing have been detected. Here, the later processing may be, for example, processing for eliminating an effect of noise points, which will be described later with reference to FIG. 8. In step S14, the signal processing unit 10 may determine, for example, whether two or more or three or more times of clusters have been detected.

If the certain number of more of times of clusters are not detected in step S14, the signal processing unit 10 may end the operations illustrated in FIG. 7. If the certain number or more of times of clusters are detected in step S14, on the other hand, the signal processing unit 10 may perform processing in the next step S15.

In step S15, the signal processing unit 10 calculates representative points of clusters obtained as a result of the clustering and distances between these representative points (step S15). Here, the representative points of the clusters may be the above-described "representative points of a point group included in clusters". That is, the representative points of the clusters may each be based on one of various calculation methods, such as a point calculated as an average of X-coordinates and an average of Y-coordinates of points included in each point group (cluster). If, in step S15, a plurality of results of detection exists as a result of the reception of the reflected waves a plurality of times, a plurality of representative points of clusters is calculated. The signal processing unit 10 then calculates the distances between the representative points of the plurality of clusters in step S15.

For example, the signal processing unit 10 may calculate a distance between a representative point of a cluster based on the first detection operation and a representative point of a cluster based on the second detection operation. The signal processing unit 10 may also calculate a distance between the representative point of the cluster based on the first detection operation and a representative point of a cluster based on the third detection operation. The signal processing unit 10 may also calculate a distance between the representative point of the cluster based on the second detection operation and the representative point of the cluster based on the third detection operation. In step S15, the signal processing unit 10 may calculate distances between the representative points for all the representative points of the plurality of clusters.

After calculating the distances between the representative points of the clusters in step S15, the signal processing unit 10 determines whether these distances are each smaller than a certain threshold (step S16). In step S16, the signal processing unit 10 determines whether these clusters belong to the same group. The certain threshold in step S16, therefore, may be a distance within which clusters can be assumed to belong to the same group, such as 1 m.

If a distance between representative points is smaller than the certain threshold in step S16, the signal processing unit 10 determines that clusters corresponding to these representative points belong to the same group (step S17). Here, when clusters belong to the same group, these clusters (point groups) may be regarded as results of detection of the same object. If a distance between representative points is not smaller than the certain threshold in step S16, on the other hand, the signal processing unit 10 determines that clusters corresponding to these representative points do not belong to the same group, that is, belong to different groups (step S18). Here, when clusters belong to different groups, these clusters (point groups) may be regarded as not results of detection of the same object but results of detection of different objects.

The operations illustrated FIG. 7 may be repeatedly performed, for example, in units of one frame (or one subframe) or the like of transmission waves. In the embodiment, the above-described operations from step S11 to step S13 may be looped. That is, in the embodiment, the electronic device 1 may repeatedly perform, a necessary number of times, operations where an object is detected using transmission waves in certain radiation patterns, clustering is performed, the object is detected using transmission waves in different radiation patterns, and clustering is performed. In this case, for example, the signal processing unit 10 may save results of the clustering to any memory or the like.

The signal processing unit 10 may determine whether clusters belong to the same group by, for example, further performing clustering, such as DBSCAN, on the representative points of the clusters, instead of the above-described operations from step S15 to step S18. That is, in this case, the signal processing unit 10 may determine representative points of the clusters corresponding to the results of the detection performed the plurality of times as a new point group and perform clustering, such as DBSCAN, on the point group.

As described above, the operations illustrated in FIG. 8 may be performed after the operations illustrated in FIG. 7 end (or each time the operations illustrated in FIG. 7 end).

When the operations illustrated in FIG. 8 start, the signal processing unit 10 counts the number of representative points of other clusters located within a certain range (distance) from a representative point of each of the plurality of clusters determined in step S17 in FIG. 7 to belong to the same group (step S21). Here, the certain range (distance) may be appropriately set as a range (distance) within which the same target is assumed to be detected. For example, the certain range (distance) may be a range (distance) of 1 m from the representative point of each of the plurality of clusters.

For example, four clusters, namely cluster A, cluster B, cluster C, and cluster D, are assumed to have been determined in step S17 in FIG. 7 to belong to the same group. In this case, in step S21, the signal processing unit 10 determines whether representative points of cluster B, cluster C, and cluster D exist within the range (distance) of 1 m from a representative point of cluster A. For example, the representative point of cluster B is assumed to be located 0.6 m from that of cluster A, the representative point of cluster C is assumed to be located 0.8 m from that of cluster A, and the representative point of cluster D is assumed to be located 1.2 m from that of cluster A. In this case, the signal processing unit 10 counts two other clusters within the range (distance) of 1 m from the representative point of cluster A.

After counting representative points of other clusters within the certain range (distance) from each of the representative points of the plurality of clusters in step S21, the signal processing unit 10 determines whether the number of representative points counted is larger than or equal to a certain value (step S22). Here, the certain value may be, for example, one, two, three, or the like. If the number of representative points counted is larger than or equal to the certain value in step S22, the signal processing unit 10 may detect point groups of the clusters including the representative points as a target (step S23). An output detected in step S23 may thus be determined as a result of detection output from the electronic device 1. If the number of representative points counted is not larger than or equal to the certain value in step S22, on the other hand, the signal processing unit 10 does not detect point groups of the clusters including the representative points as a target (step S24).

For example, the certain value in step S22 is assumed to be two. In the above example, the number of other clusters located within the range (distance) of 1 m from the representative point of cluster A is two (cluster B and cluster C). In this case, since the number of representative points counted is two in step S22, point groups included in cluster A, cluster B, and cluster C may be detected as a target. That is, clusters A, B, and C are selected clusters. The selected clusters may thus refer to, for example, the clusters counted within the certain range in the processing in step S21 (e.g., clusters B and C in the above description) and the cluster including the representative point that has served as a basis for counting (e.g., cluster A in the above description). The certain value in step S22 is assumed to be three. In the above example, the number of other clusters located within the range (distance) of 1 m from the representative point of cluster A is two (clusters B and C). In this case, since the number of representative points counted is two in step S22, the point groups included in clusters B and cluster C are not detected as a target. In this case, a point group included in cluster D is not detected as a target, either.

A representative point of a cluster to be detected output in step S23 may be an average, a median, a minimum value, a maximum value, or the like calculated from the representative points of the selected clusters. The representative point of the cluster used in step S21 or the representative point of the cluster to be detected output in step S23, for example, may be a point calculated as an average of X-coordinates and an average of Y-coordinates of points included in the cluster. The representative point of the cluster to be detected output in step S23 may be, for example, a point calculated as an average of X-coordinates and a median of Y-coordinates of points included in the selected clusters, instead. The signal processing unit 10 may thus output an average, a median, a minimum value, or a maximum value of the representative points of the selected clusters as a result of detection of an object.

In the electronic device 1 according to the embodiment, the signal processing unit 10 may thus output a result of detection of an object on the basis of certain clusters. Here, the certain clusters may be, among a plurality of clusters obtained by performing clustering on results of detection performed on an object a plurality of times, clusters including a certain number or more of representative points of other clusters within the certain distance from representative points of the clusters.

As described above, in the electronic device 1 according to the embodiment, the signal processing unit 10 may, as described with reference to steps S14 to S 18 in FIG. 7, perform the process illustrated in FIG. 8 using, among a plurality of clusters, clusters belonging to the same group. The signal processing unit 10 may thus select selected clusters from, among a plurality of clusters obtained by performing clustering on results of detection performed on an object a plurality of times, clusters whose representative points are located within a certain distance.

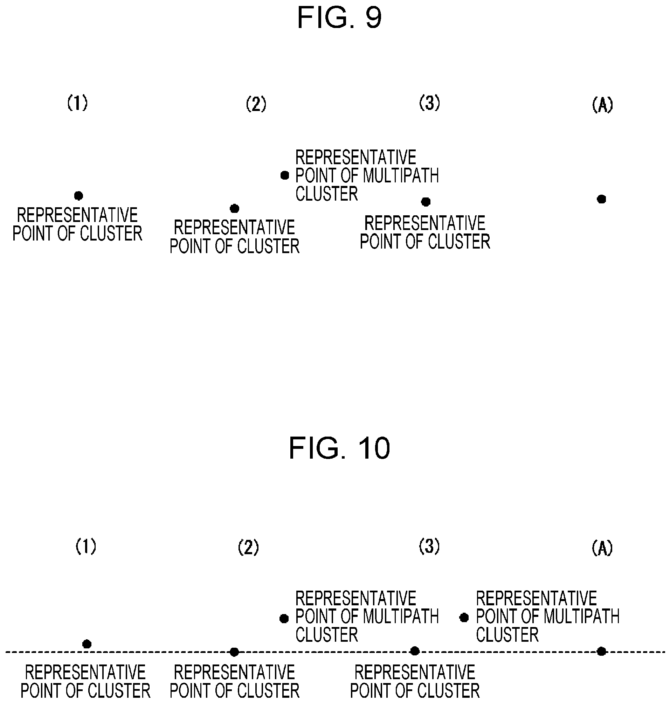

For example, clusters indicated by (1) to (3) in FIG. 9 are assumed to have been determined in step S17 in FIG. 7 to belong to the same group. For example, a representative point of the cluster indicated by (1) in FIG. 9 is assumed to be a result of clustering based on reflected waves received at a first time. A representative point of the cluster indicated by (2) in FIG. 9 is assumed to be a result of clustering based on reflected waves received at a second time. A representative point of the cluster indicated by (3) in FIG. 9 is assumed to be a result of clustering based on reflected waves received at a third time.

For example, the certain value in step S22 in FIG. 8 is assumed to be two. A representative point of a cluster affected by multipath is assumed to exist near the representative point of the cluster indicated by (2) in FIG. 9. In this case, since the representative points of the clusters indicated by (2) and (3) exist near that of the cluster indicated by (1) in FIG. 9, the number of clusters counted is two in step S22 in FIG. 8. The representative points of the clusters indicated by (1), (2), and (3) in FIG. 9, therefore, may be detected as a target, and the clusters indicated by (1), (2), and (3) may be determined as selected clusters. The representative point of the multipath cluster indicated by (2) in FIG. 9, on the other hand, does not exist near that of the cluster indicated by (1). In this case, therefore, the representative point is not detected as a target. With respect to a result of detection of an object, therefore, the representative points of the clusters indicated by (1), (2), and (3), not the representative point of the multipath cluster indicated by (2), are output as representative points of the selected clusters. In the embodiment, an average or the like of the representative points of the selected clusters may be output as a representative point of a cluster indicated by (A) in FIG. 9. According to the embodiment, a representative point of a multipath cluster is thus removed.

For example, the certain value in step S22 in FIG. 8 is assumed to be two. Representative points of clusters affected by multipath (representative points of multipath clusters) are assumed to exist near the representative points of the clusters indicated by (2) and (3) in FIG. 10. Representative points of clusters near that of the multipath cluster indicated by (2) in FIG. 10 are counted this time, and since only one representative point of a multipath cluster indicated by (3) in FIG. 10 exists, the certain value, namely two, is not reached. In this case, therefore, the representative point is not detected as a target. That is, the representative points of the multipath clusters indicated by (2) and (3) are excluded.

The number of representative points of clusters near the representative point of the cluster indicated by (1), (2), or (3) in FIG. 10, on the other hand, is two. For example, the representative points of the clusters indicated by (2) and (3) exist near that of the cluster indicated by (1) in FIG. 10. The representative points of the clusters indicated by (1) and (3) exist near that of the cluster indicated by (2) in FIG. 10. The representative points of the clusters indicated by (2) and (3) exist near that of the cluster indicated by (3) in FIG. 10. In this case, therefore, the representative points of the clusters indicated by (1), (2), and (3) may be detected as a target, and the clusters indicated by (1), (2), and (3) may be determined as selected clusters. In this case, since the representative points of the multipath clusters indicated by (2) and (3) are not located near any of the representative points of the clusters, the representative points are not detected as a target and may be removed. A result of detection of an object, therefore, is output as the representative point of the cluster indicated by (A) in FIG. 9 as an average or the like of the representative points of the selected clusters. A broken line in FIG. 10 is a conceptual reference line indicating a relative positional relationship between the representative points.

As described above, with the electronic device 1 according to the embodiment, accuracy of detecting an object can be improved by performing signal processing on results of detection performed a plurality of times. That is, with the electronic device 1 according to the embodiment, clusters that can reduce the accuracy of detecting an object can be removed. With the electronic device 1 according to the embodiment, therefore, an effect of noise points, that is, multipath, can be eliminated.

In step S22 in FIG. 8, the certain value has been described as one appropriately set. The certain value in step S22 in FIG. 8, however, may be set, for example, on the basis of transmission of transmission waves and/or reception of reflected waves performed by the electronic device 1. The certain value in step S22 in FIG. 8, for example, may be the same as the number of times that transmission waves have been transmitted. The certain value in step S22 in FIG. 8, for example, may be the same as the number of times that reflected waves have been received. In the electronic device 1 according to the embodiment, the signal processing unit 10 may thus output a result of detection of an object on the basis of certain clusters. Here, the certain clusters may be, among a plurality of clusters obtained by performing clustering on results of detection performed on an object a plurality of times, clusters including representative points of other clusters within the certain distance from representative points of the clusters, the number of the representative points of the other clusters being larger than or equal to the number of times that transmission waves are transmitted.

In FIGs. 8 and 9, selected clusters are selected while focusing upon representative points of clusters. Selected clusters may be selected, however, while focusing upon point groups of the clusters.

In the above-described embodiment, the phase control unit 24 controls (varies) phases of transmission waves when varying radiation patterns. In the embodiment, however, the electronic device 1 may vary not only phases of transmission waves but also amplitude of the transmission waves when varying radiation patterns.

Although the present disclosure has been described on the basis of the drawings and the embodiment, note that those skilled in the art can easily make various alterations and corrections on the basis of the present disclosure. Note, therefore, that the scope of the present disclosure includes such alterations and corrections. For example, the functions included in each function unit can be rearranged without causing a logical contradiction. A plurality of function units or the like may be combined together or further divided. In the present disclosure, each of the above-described embodiments is not limited to be implemented faithfully as described, and some features may be combined together or omitted as appropriate. That is, those skilled in the art can alter or correct what is disclosed herein in various ways on the basis of the present disclosure. The scope of the present disclosure, therefore, includes such alterations and corrections. In each embodiment, for example, each function unit, means, step, or the like may be added to another embodiment or replace each function unit, means, step, or the like in another embodiment without causing a logical contradiction. In each embodiment, a plurality of function units, means, steps, or the like may be combined together or further divided. Each of the above-described embodiments of the present disclosure is not limited to be implemented faithfully as described, and some features may be combined together or omitted as appropriate.

The above-described embodiment is not limited to be implemented as the electronic device 1. For example, the above-described embodiment may be implemented as a method for controlling a device such as the electronic device 1. For example, the above-described embodiment may be implemented as a program executed by a device such as the electronic device 1 and/or any computer.

In the above-described embodiment, the electronic device 1 has been described as including parts of a so-called radar sensor, such as the transmission antenna array 25 and the reception antenna array 31. In the embodiment, however, the electronic device may be achieved as, for example, a component such as the signal processing unit 10. In this case, the signal processing unit 10 may be achieved, for example, as having a function of processing signals handled by the transmission antenna array 25, the reception antenna array 31, and the like.

### REFERENCE SIGNS

- 1: electronic device
- 10: signal processing unit
- 11: signal generation section
- 12: reception signal processing section
- 13: communication interface
- 21: transmission DAC
- 22: transmission circuit
- 23: millimeter wave transmission circuit
- 24: phase control unit
- 25: transmission antenna array
- 31: reception antenna array
- 32: mixer
- 33: reception circuit
- 34: reception ADC

## Claims

1. An electronic device comprising:
a transmission antenna that transmits a transmission wave;
a reception antenna that receives a reflected wave, which is the reflected transmission wave;
a controller that controls a radiation pattern of the transmission wave; and
a signal processor that detects an object on a basis of a transmission signal transmitted as the transmission wave and a reception signal received as the reflected wave,
wherein the controller performs control such that, when the transmission wave is transmitted a plurality of times in certain units, a transmission wave with a varied radiation pattern is included at least once, and
wherein the signal processor outputs a result of the detection of the object on a basis of, among a plurality of clusters obtained by performing clustering on results of detection performed on the object the plurality of times, clusters including a certain number or more of representative points of other clusters within a certain distance from representative points of the clusters.

2. The electronic device according to claim 1,
wherein the signal processor outputs the result of the detection of the object on a basis of, among the plurality of clusters obtained by performing the clustering on the results of the detection performed on the object the plurality of times, clusters including representative points of other clusters within the certain distance from the representative points of the clusters, a number of the representative points of the other clusters being larger than or equal to the plurality of times.

3. The electronic device according to claim 1 or 2,
wherein the controller controls a phase of the transmission wave and performs control such that, when the transmission wave is transmitted the plurality of times in the certain units, a transmission wave with a varied phase is included at least once.

4. The electronic device according to any of claims 1 to 3,
wherein the controller varies the phase of the transmission wave such that a variation in a radiation direction of the transmission wave falls within a certain range.

5. The electronic device according to claim 4,
wherein the controller varies the phase of the transmission wave such that the variation in the radiation direction of the transmission wave becomes larger than or equal to 1° and smaller than or equal to 15°.

6. The electronic device according to any of claims 1 to 5,
wherein the transmission wave is transmitted the plurality of times in one frame in the certain units.

7. The electronic device according to any of claims 1 to 6,
wherein the signal processor selects the selected clusters from, among the plurality of clusters obtained by performing the clustering on the results of the detection performed on the object the plurality of times, clusters whose representative points are located within a certain distance.

8. The electronic device according to any of claims 1 to 7,
wherein the signal processor outputs an average, a median, a minimum value, or a maximum value of representative points of the selected clusters as the result of the detection of the object.

9. A method for controlling an electronic device, the method comprising the steps of:
transmitting a transmission wave using a transmission antenna;
receiving a reflected wave, which is the reflected transmission wave, using a reception antenna;
controlling a radiation pattern of the transmission wave;
detecting an object on a basis of a transmission signal transmitted as the transmission wave and a reception signal received as the reflected wave;
performing control such that, when the transmission wave is transmitted a plurality of times in certain units, a transmission wave with a varied radiation pattern is included at least once; and
outputting a result of the detection of the object on a basis of, among a plurality of clusters obtained by performing clustering on results of detection performed on the object the plurality of times, clusters including a certain number or more of representative points of other clusters within a certain distance from representative points of the clusters.

10. A program causing an electronic device to perform a process comprising the steps of:
transmitting a transmission wave using a transmission antenna;
receiving a reflected wave, which is the reflected transmission wave, using a reception antenna;
controlling a radiation pattern of the transmission wave;
detecting an object on a basis of a transmission signal transmitted as the transmission wave and a reception signal received as the reflected wave;
performing control such that, when the transmission wave is transmitted a plurality of times in certain units, a transmission wave with a varied radiation pattern is included at least once; and
outputting a result of the detection of the object on a basis of, among a plurality of clusters obtained by performing clustering on results of detection performed on the object the plurality of times, clusters including a certain number or more of representative points of other clusters within a certain distance from representative points of the clusters.
